# EUROPEAN PATENT SPECIFICATION

(11) **EP 0 815 619 B1**
(45) Date of publication and mention of the grant of the patent: **02.06.1999**
(21) Application number: 96909788.0
(22) Date of filing: 01.03.1996
(51) Int. Cl.: H01R 13/658

(54) **CARD CONNECTOR ASSEMBLY**
KARTENSTECKVERBINDERANORDNUNG
ENSEMBLE CONNECTEUR DE CARTE

(30) Priority: 03.03.1995 JP 44346/95
(43) Date of publication of application: 07.01.1998
(73) Proprietor: THE WHITAKER CORPORATION, Wilmington, Delaware 19808 (US)
(72) Inventor: YAMAMOTO, Yoshihisa, Yokohama-shi, Kanagawa 225 (JP); FUTATSUGI, Takashi, Tokyo 179 (JP)
(74) Representative: Heinz-Schäfer, Marion
(86) International application number: US9603760
(87) International publication number: WO9627920

(56) References cited:
- EP-A- 0 336 330
- US-A- 5 286 207
- US-A- 5 288 247
- US-A- 5 290 174

## Description

The present invention concerns a card connector assembly equipped with a frame which guides a card such as a PC card or the like, and an insulating housing which accommodates this card, which is inserted thereinto while being guided by the frame.

PC cards which contain IC's and the like are used, for example, in the field of personal computers. Such PC cards contain memories, and offer an amount of integrated information that is more than 100 times that offered by conventional cards utilizing magnetism. Furthermore, PC cards include types which contain not only memories, but also hard disks or modems. A PC card dedicated terminal is used when PC cards are utilized; this PC card dedicated terminal mounts a card connector assembly which has a frame that guides the PC card and an insulating housing that receives and accommodates the PC card. Furthermore, the surface of a PC card is ordinarily covered by a thin metal surface, and any charge accumulating in the PC card flows via this metal surface to ground contacts formed on the frame of the card connector assembly. In this way, electrostatic destruction of the circuits of the PC card is prevented.

PC cards are generally standardized in order to obtain interchangeability between individual PC cards. One of these standards is a standard for forming a signal ground (SG) on one of the two surfaces of the PC card in order to obtain appropriate grounding with respect to signals. In a card that would satisfy the standard, a metal surface covers most of the PC card to define a shield, while an SG is provided at one end of the card surface along one side ordinarily insulated from the shield. In card connector assemblies, short-circuiting between the ground contacts of the frame which contact the shield to define a chassis ground, and the ground contacts which contact the SG, may form a loop which causes noise. Accordingly, it is necessary to provide a discrete ground circuit which is independent from the chassis ground. In conventional card connector assemblies (for example, see Japanese Patent Application Kokai No. 6-151019), no consideration is given to recently standardized SG's; accordingly, no discrete SG ground circuit is formed that would have the effect of reducing noise.

U.S. Patent No. 5,286,207 discloses a card connector assembly comprising a reinforcement plate that bridges the frame of the connector. The plate includes contacts for establishing ground contact to the card for capturing electrostatic charges on the card.

US Patent No. 5,288,247 discloses a card connector assembly comprising a housing, a frame and a conductive shroud over the housing. The shroud includes spring contact fingers that project into the mouth of the connector for making electrical connection with ground contacts on the card.

Furthermore, card connector assemblies also include so-called "two-storied" or stacked card connector assemblies having two sites that accommodate respective PC cards, so that two PC cards can be inserted simultaneously (see Japanese Patent Application Kokai No. 6-332573). Such two-storied card connector assemblies are formed as integral units. Accordingly, in cases where a card connector assembly for a single PC card (in which only one PC card site is needed) is required, it is necessary to manufacture this single-card connector assembly separately. In cases where two types of card connector assemblies, i.e., one for a single card and one for two cards, are thus manufactured, there are separate manufacturing expenses so that the cost of the card connector assemblies is correspondingly increased. Furthermore, three types of PC cards with different thicknesses are widely used, and the expense of manufacturing two-storied card connector assemblies which can handle all three types of PC cards leads to a further increase in costs. Moreover, conventional two-storied card connector assemblies cannot handle PC cards on which SG's are formed, and if a discrete ground structure is simply formed on a conventional card connector assembly cooperable with such PC cards, the thickness of the card connector assembly is increased.

In light of the facts mentioned above, the first object of the present invention is to provide a thin or low profile card connector assembly containing a discrete ground structure that contacte the card's signal ground. The second object of the present invention is to provide a thin card connector assembly having a discrete ground structure that contacts the SG of the PC card, and that allows a two-storied card connector assembly to be formed by stacking two of the thin card connectors together.

The card connector assembly of the present invention is equipped with a ground plate, and contacts are formed on the ground plate that engage grounding projections on the card. A cut-out is formed in the insulative housing, and the ground plate is attached so that the ground plate covers this cut-out part for the contacts to engage the grounding projections of the card. The cut out or recess formed in the surface of the housing wall extends from a position remote from the card-receiving site and toward the card receiving direction. Furthermore, anchoring holes are formed in the ground plate and cooperate with anchoring projections formed on the insulative housing so that accidental removal of the ground plate from the insulative housing is prevented. Accordingly, a thin card connector assembly can be obtained.

In another aspect, the card connector assembly of the present invention comprises complementary engagement parts defined on facing portions of the respective insulative housings of first and second card connector assemblies. A two-storied card connector assembly can be formed by stacking the first and second card connector assemblies together with the engagement parts engaged. The first and second card connector assemblies are each equipped with a frame and an insulative housing, and can also be used independently as card connector assemblies. Furthermore, the first and second card connector assemblies are each equipped with a ground plate which is attached so that the ground plate covers the cut-out of the insulative housing; accordingly, a thin card connector assembly can be attained in which the grounding projections can be used as a signal ground.

Embodiments of the invention will now be described by way of example with reference to the drawings, in which:
FIGURES 1 to 6 are plan, front, bottom side, sectional and back views, respectively, illustrating one embodiment of the connector of the card connector assembly of the present invention, with FIG. 5 being taken along lines 5-5 of FIG. 1;
FIGURES 7 to 11 are plan, front, bottom, side and sectional views, respectively, of the connector of another embodiment of the card connector assembly of the present invention, with FIG. 11 taken along lines 11-11 of FIG. 9;
FIGURE 12 is a plan view which illustrates a two-storied card connector assembly constructed by stacking together the connectors shown in FIGS. 1 and 7;
FIGURE 13 is a sectional view taken along lines 13-13 of FIG. 12;
FIGURE 14 is a partial enlargement of FIG. 13; and
FIGURE 15 is a perspective view which illustrates a representative PC card on which a signal ground is formed.

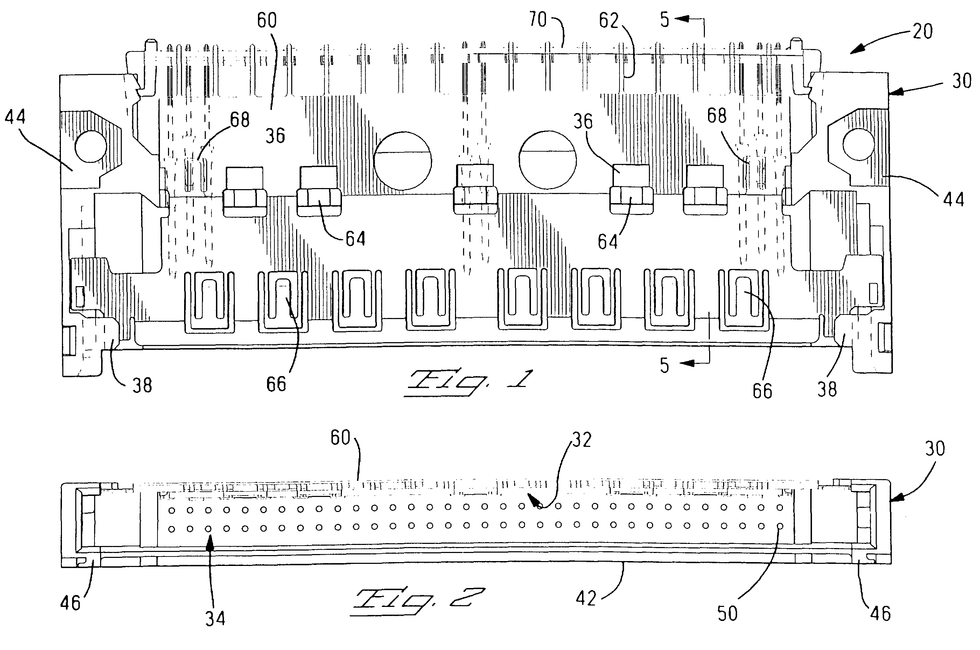

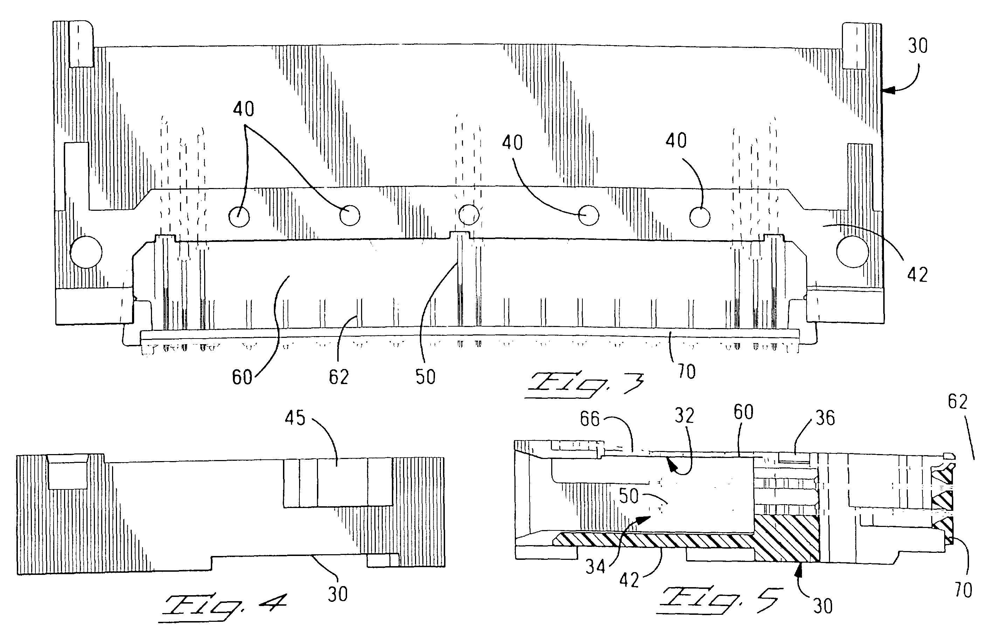

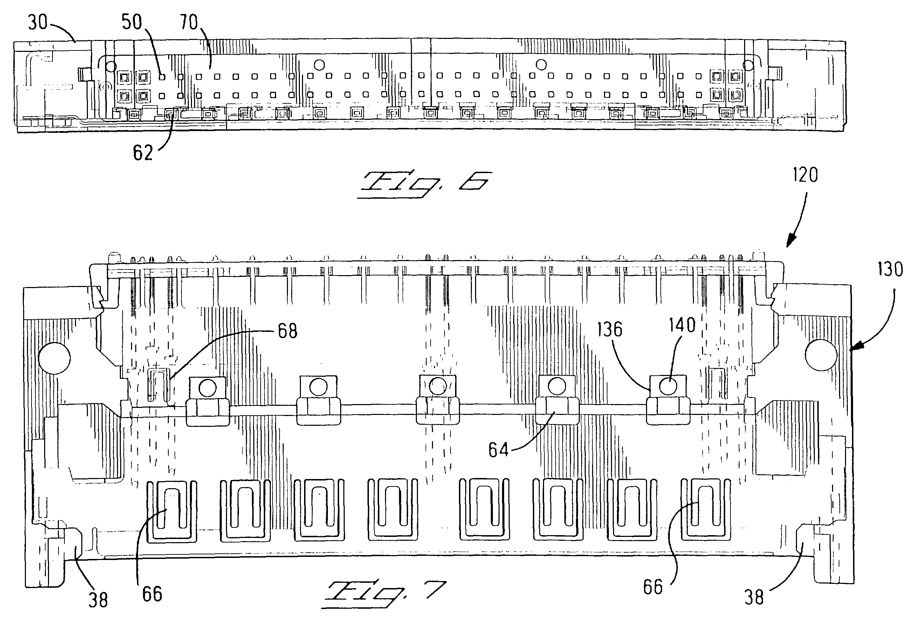

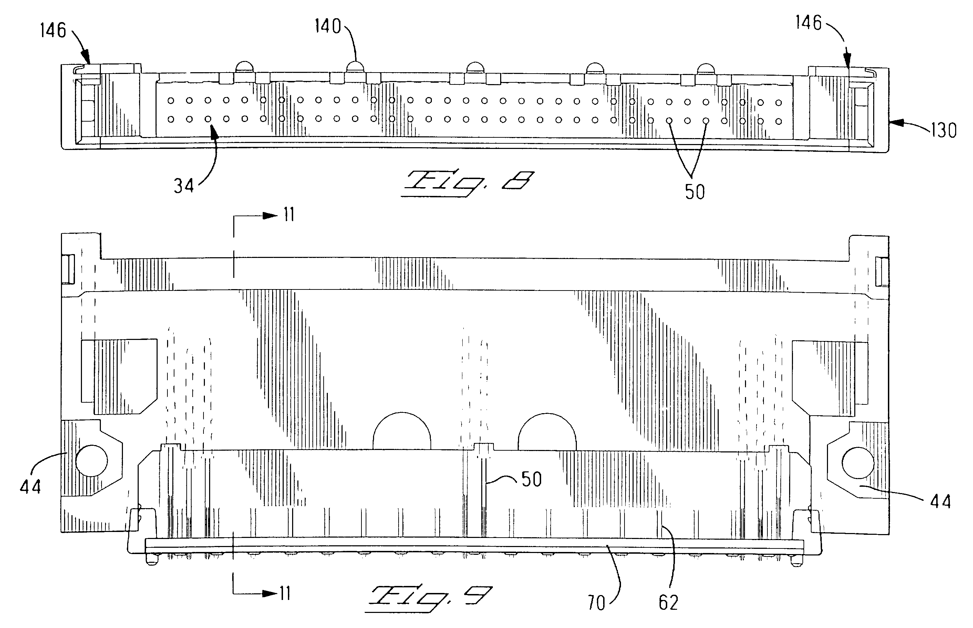

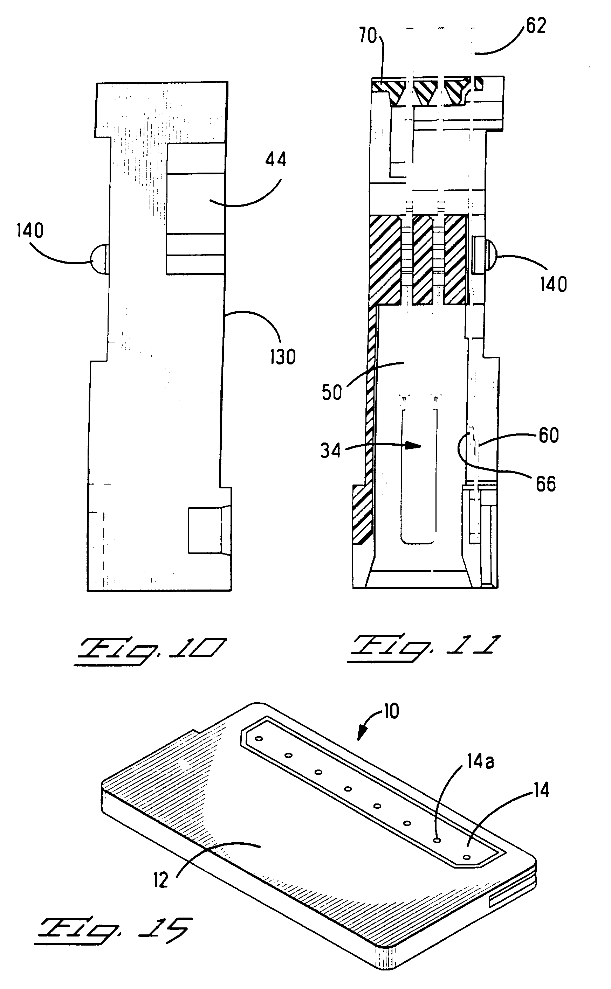

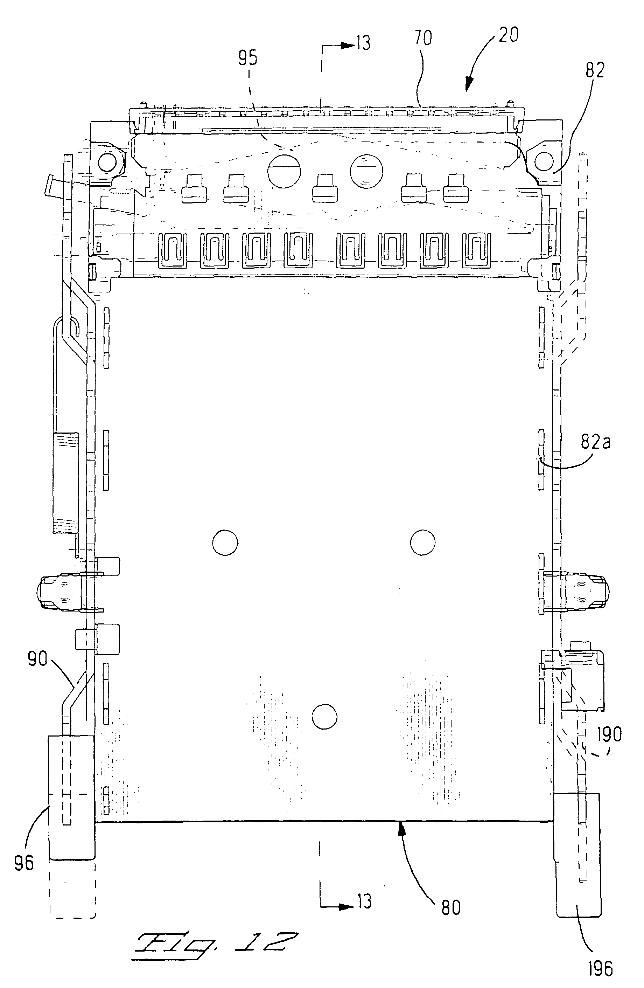

The card connector assembly is equipped with a connector 20 (FIGS. 1 to 6) and a frame 80 (FIG. 12). The connector 20 is equipped with an insulative housing 30 containing a plurality of contacts 50 arranged in two parallel upper and lower rows. A ground plate 60 is attached so that it covers a cut-out 32 formed in the insulative housing 30. An alignment plate 70 of the housing has holes through which pass the tip portions of the plurality of contacts 50 and terminals 62 of the ground plate 60.

Walls of the insulative housing 30 define a card-receiving site 34 that accommodates the PC card shown in FIG. 15, and cut-out 32 is formed in the portion of the wall facing the signal ground 14 of the PC card 10. A ground plate 60 is attached to housing 30 so that the ground plate 60 covers the cut-out 32. Accordingly, the ground plate 60 can be attached without increasing the thickness of the insulating housing 30, so that a thin card connector assembly can be obtained. In addition, warping of the insulative housing 30 is prevented by the ground plate 60.

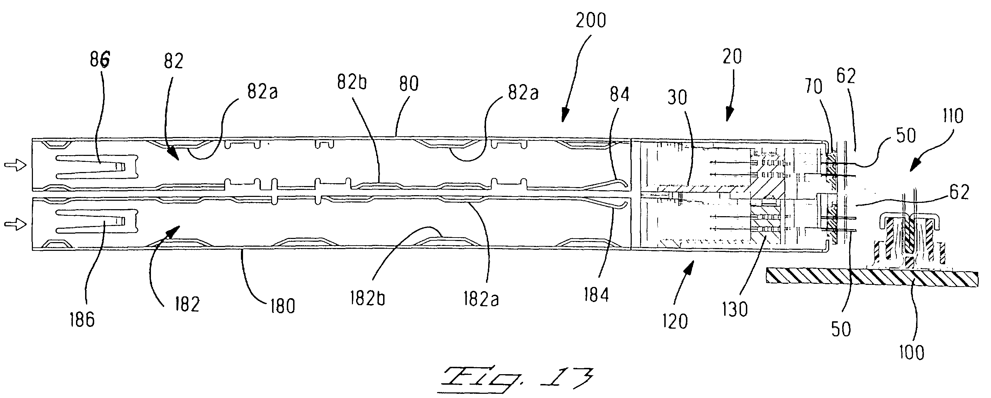

Furthermore, anchoring projections such as projections 36 are formed in insulative housing 30 and are T-shaped in cross section, and are cooperable with anchoring holes 64 formed in the ground plate 60, preventing unintentional removal of the ground plate 60 from the insulative housing 30. Portions of the ground plate 60 fit beneath protruding portions 38 formed in the insulative housing 30, so that the ground plate 60 is held in place. As a result, even if the PC card 10 is erroneously inserted into the insulative housing 30, stripping of the ground plate 60 can be prevented. Connector 20 can be stacked on a connector 120 (see FIG. 7); recesses 40 are formed in the bottom housing wall 42 facing the second connector 120 and provide positioning in the case of such stacking.

Apertured mounting flanges 44 are formed in the insulative housing 30, and during assembly are aligned with apertured mounting tabs 82 of frame 80 for receipt therethrough of fasteners such as screws and thereby both housing and frame are fastened to a substrate (not shown). This fastening defines a chassis ground and also accurately positions insulative housing 30 to frame 80. Engagement rails 46 are formed in the bottom wall 42 of the insulative housing 30, and these engagement rails 46 engage with engagement grooves 146 formed in the connector 120 (described later), so that the connector 20 and connector 120 are fastened in a stacked configuration.

Contacts 66 are formed in the ground plate 60 and are engageable with contact grounding projections 14a formed on the PC card 10 (FIG. 15), so that the signal ground 14 of the card is grounded. The contacts 66 are formed so that they are relatively long and have a sufficient springiness and are therefore resistant to plastic deformation, and are constructed so that they do not contact the metal surface 12 of the PC card (FIG. 15). Moreover, as was described above, the anchoring holes 64 are engaged by the T-shaped projections 36 of the insulative housing 30. Two tongue parts 68 are formed at either end of the ground plate 60 that engage projections (not shown) formed on the insulative housing 30. As a result of this contact, the ground plate 60 is prevented from slipping out of the insulating housing 30.

As was described above, holes are formed in alignment plate 70 through which pass the tip portions of the plurality of contacts 50 and terminals 62 of the ground plate 60. Since the terminals 62 of the ground plate 60 pass through these holes, terminals 62 do not contact the frame 80; as a result, the ground plate 60 and the frame 80 are not electrically connected. If necessary, furthermore, tongue parts (not shown) may be formed on one or both sides of the ground plate 60 that cause the ground plate 60 to contact the frame 80 and become electrically connected therewith.

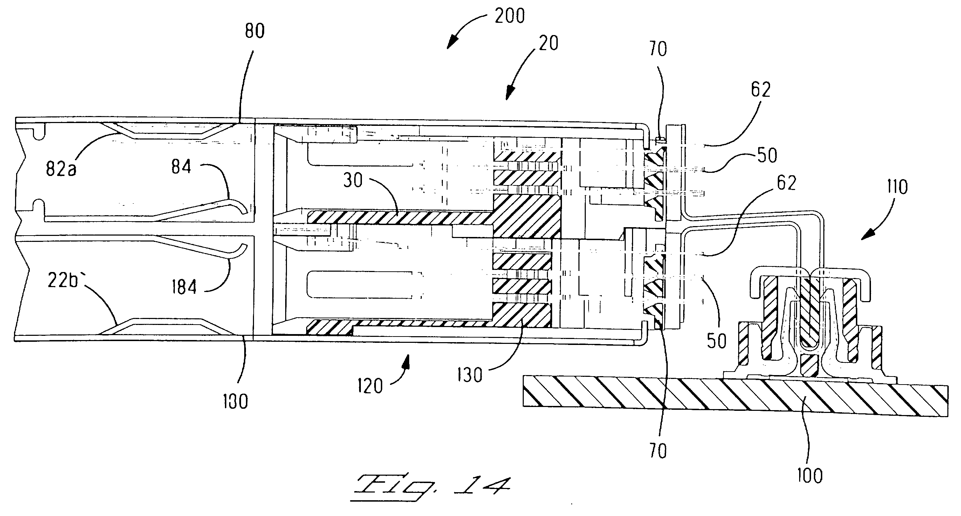

FIGS. 7 through 11 illustrate another embodiment of the card connector assembly of the present invention. The connector 120 has substantially the same structure as the connector 20 of FIGS. 1 to 6; accordingly, the same elements are labeled with the same symbols, and only the points of difference between the two embodiments will be described.

The main point of difference between the two embodiments is that projecting parts 140 which are inserted into the recessed parts 40 in the insulative housing 30, are formed on the insulative housing 130 of the connector 120. These projecting parts 140 are defined on T-shaped projections 136, and provide positioning when a two-storied card connector assembly 200 (FIG. 13) is constructed by stacking the connector 20 and connector 120 together as described above. When the connector 20 and connector 120 are stacked together, the engagement rails 46 of the connector 20 engage with the engagement grooves 146 of the connector 120 as described above. The two-storied card connector assembly 200 is constructed by stacking together the connector 20 and connector 120, which can also be used independently; accordingly, costs are reduced compared to a case where an integral two-storied card connector assembly is manufactured.

The two-storied card connector assembly of FIGS. 12 to 14 is formed by mounting the frame 80 and the frame 180 on the connector 20 and connector 120, respectively, and stacking the two connectors together. The metal surfaces of the frame 80,180 are formed by punching, and the left and right end portions of the frame 80,180 are bent, so that guide parts 82,182 are formed on the left and right end portions of the frame 80,180. The guide parts 82,182 are respectively equipped with upper and lower rails 82a,82b;182a,182b caused to project inward by the pressing of the metal surfaces, to hold portions of the inserted PC card. First ground contacts 84,184 are formed at the forward ends of the guide parts 82,182 and extend inwardly from below with respect to the direction of insertion; and second ground contacts 86,186 are formed on the sides in the vicinity of the entry openings of the guide parts 82,182. The ground contacts 84,184 and 86,186 contact the metal surface covering the surface of the PC card, and act to discharge any electrostatic charge that has accumulated on this metal surface. This charge is grounded to the substrate 100 via the ground contacts, mounting tabs 82, the fasteners and flexible wiring board 110. As a result, any damage to the circuits of the PC card that otherwise might be caused by a charge on the metal surface formed on the PC card flowing into the circuits of the PC card, is prevented.

An operating rod 90,190 and a cam bar 95 for PC card removal, are held on the frame 80,180. The operating rod 90,190 is formed by punching out the metal surface, and has elasticity. As is shown in FIG. 12, the operating rod 90,190 is held so that it is free to slide on the frame 80,180. Furthermore, a cam bar 95 is linked to the forward tip of the operating rod 90,190 (with respect to the direction of insertion), and an intermediate portion of this cam bar 95 is pivot-supported on the frame 80,180. Furthermore, a button 96,196 is mounted on the rear end portion of the operating rod 90,190 (with respect to the direction of insertion). When the PC card inserted into the frame 80,180 is to be pushed out, the button 96,196 is pushed in the direction of insertion (i.e., in the direction indicated by arrow). The cam bar 95 is constructed so that it slides over the T-shaped projections 36,136 (see FIGS. 1 and 7); accordingly, the cam bar 95 is prevented from being deformed or floating upward from the frame 80,180. Here, electrical contact between the frame 80,180 and ground plate 60 can be prevented by forming an insulating layer, either film or a coating, between the two.

In the card connector assembly of the present invention, as was described above, appropriate grounding with respect to signals can be obtained by installing a ground plate which is independent of the frame. Since the ground plate is attached so that it covers a cut-out, a thin card connector assembly can be obtained. Moreover, a two-storied card connector assembly can be formed by stacking the first and second card connector assemblies of the present invention together with the respective engagement parts of the first and second card connector assemblies engaged. The first and second card connector assemblies of the present invention can also be used independently as card connector assemblies.

## Claims

1. A card connector assembly (20,120) equipped with a frame (80,180) adapted to guide a card (10) during insertion thereinto, and an insulative housing (30,130) defining a card-receiving site (34), said card connector assembly (20,120) being characterized in that:
said insulative housing (30,130) has anchoring projections (36) and a cut-out (32) formed in a portion facing one surface of a said card (10), the cut-out being formed in a surface of the housing and extending from a position remote from the card receiving site toward said card-receiving site; and
a ground plate (60) has anchoring holes (64) that cooperate with anchoring projections (36), and contacts (66) that contact grounding projections (14a) of said card (10), said ground plate (60) being attached to said insulative housing (30,130) so that said ground plate (60) covers said cut-out(32) enabling said contacts (66) to engage said card grounding projections (14a).

2. The assembly of claim 1 further characterized in that insulative housing (30) includes an alignment plate (70) through certain holes of which pass contacts (50), and said ground plate (60) includes terminals (62) passing through other holes of said alignment plate (70) of said insulative housing (30).

3. A two-storied card connector assembly (200) having first and second card connector assemblies (20,120) stacked together each equipped with a frame (80,180) adapted to guide a card (10) during insertion, the first and second assemblies (20,120) each including an insulative housing (30,130) defining a card-receiving site (34), said two-storied card connector assembly (200) being characterized in that:
said insulative housings (30,130) each have anchoring projections (36), a cut-out (32) formed in a portion facing one surface of a said card (10), and mutually engaging engagement parts (40,140) formed in facing portions of said insulative housings (30,130), the cut-out being formed in a surface of the housing and extending from a position remote from the card receiving site toward said card-receiving site; and
said card connector assemblies (20,120) include ground plates (60) having anchoring holes (64) that engage with said anchoring projections (36), and having contacts (66) that electrically engage grounding projections (14a) of said card (10), said ground plates (60) being attached to said insulative housings (30,130) so that said ground plates (60) cover said cut-outs (32) enabling said contacts (66) to engage said card grounding projections (14a).

4. The assembly (200) of claim 3 further characterized in that engagement rails (46) are formed in a wall (42) of said insulative housing (30) facing connector (120) and cooperate with engagement grooves (146) formed in an adjacent surface of connectcr (120), facilitating stacking of connector (20) and connector (120).

## Patentansprüche

1. Kartenverbinderanordnung (20, 120), die ausgestattet ist mit einem Rahmen (80, 180), der so ausgeführt ist, daß er eine Karte (10) während des Einsetzens in diesen hinein führt; und ein isolierendes Gehäuse (30, 130), das einen Kartenaufnahmeplatz (34) begrenzt, wobei die Kartenverbinderanordnung (20, 120) dadurch gekennzeichnet wird, daß:
das isolierende Gehäuse (30, 130) Verankerungsvorsprünge (36) und eine Aussparung (32) aufweist, die in einem Abschnitt gebildet wird, der zu einer Fläche einer Karte (10) hin liegt, wobei die Aussparung in einer Fläche des Gehäuses gebildet wird und sich von einer Position aus, die vom Kartenaufnahmeplatz abgelegen ist, zum Kartenaufnahmeplatz hin erstreckt; und
eine Erdungsplatte (60) aufweist: Verankerungslöcher (64), die mit Verankerungsvorsprüngen (36) zusammenwirken: und Kontakte (66), die Erdungsvorsprünge (14a) der Karte (10) kontaktieren, wobei die Erdungsplatte (60) am isolierenden Gehäuse (30, 130) so befestigt ist, daß die Erdungsplatte (60) die Aussparung (32) bedeckt, wodurch die Kontakte (66) mit den Kartenerdungsvorsprüngen (14a) in Eingriff kommen können.

2. Anordnung nach Anspruch 1, die außerdem dadurch gekennzeichnet wird, daß ein isolierendes Gehäuse (30) eine Ausrichtungsplatte (70) umfaßt, durch deren bestimmte Löcher Kontakte (50) hindurchgehen; und die Erdungsplatte (60) Anschlußklemmen (62) umfaßt, die durch andere Löcher der Ausrichtungsplatte (70) des isolierenden Gehäuses (30) hindurchgehen.

3. Zweietagige Kartenverbinderanordnung (200), die erste und zweite Kartenverbinderanordnungen (20, 120) aufweist, die übereinandergestapelt sind, und wobei jede mit einem Rahmen (80, 180) ausgestattet ist, der so ausgeführt ist, daß er eine Karte (10) während des Einsetzens führt, wobei die erste und zweite Anordnung (20, 120) jeweils ein isolierendes Gehäuse (30, 130) umfaßt, das einen Kartenaufnahmeplatz (34) begrenzt, wobei die zweietagige Kartenverbinderanordnung (200) dadurch gekennzeichnet wird, daß:
die isolierenden Gehäuse (30, 130) jeweils aufweisen: Verankerungsvorsprünge (36); eine Aussparung (32), die in einem Abschnitt gebildet wird, die zu einer Fläche einer Karte (10) hin liegt; und gegenseitig in Eingriff kommende Eingriffsteile (40, 140), die in gegenüberliegenden Abschnitten der isolierenden Gehäuse (30, 130) gebildet werden, wobei die Aussparung in einer Fläche des Gehäuses gebildet wird und sich von einer Position aus, die vom Kartenaufnahmeplatz abgelegen ist, zum Kartenaufnahmeplatz hin erstreckt; und
die Kartenverbinderanordnungen (20, 120) Erdungsplatten (60) umfassen, die aufweisen: Verankerungslöcher (64), die mit den Verankerungsvorsprüngen (36) in Eingriff kommen; und Kontakte (66), die mit Erdungsvorsprüngen (14a) der Karte (10) elektrisch in Eingriff kommen, wobei die Erdungsplatten (60) an den isolierenden Gehäusen (30, 130) so befestigt sind, daß die Erdungsplatten (60) die Aussparungen (32) bedecken, so daß die Kontakte (66) mit den Kartenerdungsvorsprüngen (14a) in Eingriff kommen können.

4. Anordnung (200) nach Anspruch 3, außerdem dadurch gekennzeichnet, daß Eingriffsschienen (46) in einer Wand (42) des isolierenden Gehäuses (30), die zum Verbinder (120) hin liegt, gebildet werden und mit Eingriffsnuten (146) zusammenwirken, die in einer angrenzenden Fläche des Verbinders (120) gebildet werden, was das Stapeln von Verbinder (20) und Verbinder (120) übereinander erleichtert.

## Revendications

1. Assemblage connecteur de carte (20, 120) comportant un cadre (80, 180), destiné à guider une carte (10) au cours de son insertion, et un boîtier isolant (30, 130), définissant un site de réception de la carte (34), ledit assemblage connecteur de carte (20, 120) étant caractérisé en ce que:
ledit boîtier isolant (30, 130) comporte des saillies d'ancrage (36) et une entaille (32), formée dans une partie orientée vers une surface de ladite carte (10), l'entaille étant formée dans une surface du boîtier et s'étendant d'une position éloignée du site de réception de la carte vers ledit site de réception de la carte; et
une plaque de terre (60) comporte des trous d'ancrage (64), coopérant avec les saillies d'ancrage (36), et des contacts (66) contactant les saillies de mise à la terre (14a) de ladite carte (10), ladite plaque de terre (60) étant fixée audit boîtier isolant (30, 130) de sorte que ladite plaque de terre (60) recouvre ladite entaille (32), permettant l'engagement desdits contacts (66) dans lesdites saillies de mise à la terre de la carte (14a).

2. Assemblage selon la revendication 1, caractérisé en outre en ce que le boîtier isolant (30) englobe une plaque d'alignement (70), les contacts (50) traversant certains trous de celle-ci, ladite plaque de terre (60) englobant des bornes (62) traversant d'autres trous de ladite plaque d'alignement (70) dudit boîtier isolant (30).

3. Assemblage connecteur de carte à deux niveaux (200), comportant des premier et deuxième assemblages connecteurs de carte (20, 120), empilés et comportant chacun un cadre (80, 180), destiné à guider une carte (10) au cours de l'insertion, les premier et deuxième assemblages (20, 120) englobant chacun un boîtier isolant (30, 130), définissant un site de réception de la carte (34), ledit assemblage connecteur de carte à deux niveaux (200) étant caractérisé en ce que:
lesdits boîtiers isolants (30, 130) comportent chacun des saillies d'ancrage (36), une entaille (32), formée dans une partie orientée vers une surface de ladite carte (10) ainsi que des parties d'engagement à engagement mutuel (40, 140), formées dans les parties de face desdits boîtiers isolants (30, 130), l'entaille étant formée dans une surface du boîtier et s'étendant d'une position éloignée du site de réception de la carte vers ledit site de réception de la carte; et
lesdits assemblages connecteurs de carte (20, 120) englobent des plaques de terre (60) comportant des trous d'ancrage (64), s'engageant dans lesdites saillies d'ancrage (36) et comportant des contacts (66) s'engageant électriquement dans les saillies de mise à la terre (14a) de ladite carte (10), lesdites plaques de terre (60) étant fixées auxdits boîtiers isolants (30, 130), permettant la couverture desdites entailles (32) par lesdites plaques de terre (60) et l'engagement desdits contacts (66) dans lesdites saillies de mise à la terre de la carte (14a).

4. Assemblage (200) selon la revendication 3, caractérisé en outre en ce que des rails d'engagement (46) sont formés dans une paroi (42) dudit boîtier isolant (30), faisant face audit connecteur (120) et coopérant avec les rainures d'engagement (146) formées dans une surface adjacente du connecteur (120), facilitant l'empilage du connecteur (20) et du connecteur (120).
